# EUROPEAN PATENT APPLICATION

(11) **EP 3 832 873 A1**
(43) Date of publication of application: **09.06.2021**
(21) Application number: 19843331.0
(22) Date of filing: 22.05.2019
(51) Int. Cl.: H02M 3/335, H02M 3/28

(54) **SWITCHING POWER SUPPLY CIRCUIT AND POWER CONVERSION DEVICE EQUIPPED WITH SAME**

(30) Priority: 02.08.2018 JP 2018146117
(71) Applicant: HITACHI INDUSTRIAL EQUIPMENT SYSTEMS CO., LTD., Chiyoda-ku Tokyo 101-0022 (JP)
(72) Inventor: SATO Fumihiro, Tokyo 100-8280 (JP); UCHINO Yoshihiro, Tokyo 101-0022 (JP); HIRAGA Masahiro, Tokyo 101-0022 (JP); TANABE Keisuke, Tokyo 101-0022 (JP)
(74) Representative: MERH-IP Matias Erny Reichl Hoffmann Patentanwälte PartG mbB
(86) International application number: PCT/JP2019/020351
(87) International publication number: WO 2020/026566

(57) **Abstract**

In a switching power supply circuit having a configuration in which a plurality of switching elements are connected in series, voltage imbalance between two capacitors occurs when a connection point between the capacitors is connected with a gate of a high-voltage side switching element. To solve the above problem, a DC voltage source, a transformer in which one side of a primary winding is connected to a high-voltage side of the DC voltage source, a first switching element in which a gate terminal is connected to a controller and a source terminal is connected to a low-voltage side of the DC voltage source, a second switching element in which a drain terminal is connected to another side of the primary winding in the transformer, and a source terminal is connected to a drain terminal of the first switching element, a Zener diode connected between a gate and the source of the second switching element, a gate drive circuit having one side which is connected to the gate terminal of the second switching element, and a capacitor connected between another terminal of the gate drive circuit and a high-voltage side terminal of the DC voltage source are provided. A current path for a current flowing from a connection point between the capacitor and the gate drive circuit to the low-voltage side of the DC voltage source is provided.

## Description

### TECHNICAL FIELD

The present invention relates to a power conversion device equipped with a switching power supply circuit that obtains a DC voltage having different voltage specifications from a DC voltage section.

### BACKGROUND ART

In the related art, various switching power supply circuits such as flyback converters are provided as isolated power supply circuits that receive an AC voltage to obtain a DC voltage and further obtain a DC voltage having different voltage specifications from the above DC voltage. Such a switching power supply circuit receives the supply of DC power from the DC voltage section to switch a primary side of a transformer by a PWM control circuit and to output a DC voltage having different voltage specifications. The voltage of the DC voltage section increases as an input AC voltage becomes higher. Thus, it is necessary to respond from 350 V to a voltage higher than 1000 V to the AC voltage. A switching element used in a known switching power supply circuit is a MOSFET having a breakdown voltage of several hundred V when receiving AC 200 V, but needs to be equipped with a MOSFET having a breakdown voltage higher than 1000 V when receiving AC 400 V. In particular, the switching element having a breakdown voltage higher than 1000 V has a problem of high cost.

As a solution to the problem, Patent Documents 1 and 2 discloses a circuit configuration in which a plurality of MOSFETs having a breakdown voltage of several hundred V are combined in series. In such a circuit configuration, it is possible to perform switching in a range without exceeding the breakdown voltage of each MOSFET, by dividing a DC voltage higher than 1000 V into the plurality of MOSFETs having a breakdown voltage of several hundred V. Thus, it is possible to reduce the cost of a switching element section in comparison to a case using a switching element having a breakdown voltage higher than 1000 V in the related art.

### CITATION LIST

### PATENT DOCUMENT

Patent Document 1: US 2011/0261594 A1
Patent Document 2: JP 2008-92791 A

### SUMMARY OF THE INVENTION

### PROBLEMS TO BE SOLVED BY THE INVENTION

Fig. 1 in Patent Document 1 illustrates a switching power supply circuit including a DC voltage source, two capacitors, a first switching element, a second switching element, and a transformer. The two capacitors are connected in series between terminals of the DC voltage source. The first switching element receives the secondary voltage of the transformer, which is fed back to the first switching element, so as to control the secondary voltage of the transformer to a desired voltage. The second switching element is connected in series with the first switching element and is equipped with a circuit configured to synchronize with switching of the first switching element. The transformer is provided between the second switching element and a high-voltage side of the DC voltage source. An intermediate point between the two capacitors is connected to the gate terminal of the second switching element through a gate drive circuit configured by a member in which a resistor and a diode are connected in parallel. Thus, a voltage to be applied to the first switching element is a potential difference between a voltage on a low-voltage side of the DC voltage source and a voltage at a connection point between the two capacitors. A voltage to be applied to the second switching element is a potential difference between the voltage at the connection point between the two capacitors and the voltage on the high-voltage side of the DC voltage source. Therefore, when the voltages of the two capacitors are substantially equal to each other, a voltage of about half of the voltage of the DC voltage source is applied to each of the switching elements, and thus it is possible to perform a switching operation in a range without exceeding the breakdown voltage. However, energy to be supplied to the two capacitors when the first switching element turns off is larger than energy to be supplied from the two capacitors when the first switching element turns on. Thus, there is a concern that the voltages of the two capacitors are not equal to each other, and the voltage at the connection point is higher than the half of the voltage of the DC voltage source. Therefore, a concern that a potential difference between the voltage on the low-voltage side of the DC voltage source and the voltage at the connection point between the two capacitors exceeds the breakdown voltage of the first switching element has been a problem.

In addition, Fig. 2 in Patent Document 2 illustrates a circuit configuration in which, in order to solve voltage imbalance between two capacitors concerned in Patent Document 1, a member in which a resistor and a diode is connected in series is added between a connection point between the two capacitors and an intermediate point in the primary winding of the transformer. Therefore, a voltage of the DC voltage source is generated in the primary winding of the transformer during a period when the first switching element and the second switching element turn on together. Thus, when the voltage at the connection point between the two capacitors is higher than the half of the voltage of the DC voltage source, the voltage imbalance between the two capacitors is suppressed by connecting the connection point between the two capacitors with the intermediate point in the primary winding of the transformer. The reason of the suppression is that a current flows from the connection point between the two capacitors to the intermediate point in the primary winding of the transformer. However, since the structure of the transformer becomes complicated, there are problems such as an increase of the cost of the transformer and difficulty in designing the transformer.

### SOLUTIONS TO PROBLEMS

In view of the above background art and problems, an example of the present invention includes a DC voltage source, a transformer in which one side of a primary winding is connected to a high-voltage side of the DC voltage source, a first switching element in which a gate terminal is connected to a controller and a source terminal is connected to a low-voltage side of the DC voltage source, a second switching element in which a drain terminal is connected to another side of the primary winding in the transformer, and a source terminal is connected to a drain terminal of the first switching element, a Zener diode connected between a gate and the source of the second switching element, a gate drive circuit having one side which is connected to the gate terminal of the second switching element, and a capacitor connected between another terminal of the gate drive circuit and a high-voltage side terminal of the DC voltage source. A current path for a current flowing from a connection point between the capacitor and the gate drive circuit to the low-voltage side of the DC voltage source is provided.

### EFFECTS OF THE INVENTION

According to the present invention, it is possible to suppress voltage imbalance between a plurality of capacitors, with a simple circuit configuration.

### BRIEF DESCRIPTION OF THE DRAWINGS

Fig. 1 is a circuit diagram of a switching power supply circuit disclosed in Patent Document 1.
Fig. 2 illustrates an operation waveform of the switching power supply circuit disclosed in Patent Document 1.
Fig. 3 is a circuit diagram of a switching power supply circuit according to Example 1.
Fig. 4 illustrates an operation waveform of the switching power supply circuit according to Example 1.
Fig. 5 is a circuit diagram of a switching power supply circuit according to Example 2.
Fig. 6 is a circuit diagram illustrating an example of the switching power supply circuit according to Examples 1 and 2.
Fig. 7 is a circuit diagram illustrating another example of the switching power supply circuit according to Example 2.
Fig. 8 is a circuit diagram illustrating still another example of the switching power supply circuit according to Example 2.
Fig. 9 is a circuit diagram illustrating a basic configuration of a switching power supply circuit according to Example 3.
Fig. 10 is a circuit diagram illustrating the detailed configuration of the switching power supply circuit according to Example 3.
Fig. 11 is a circuit diagram of a switching power supply circuit according to Example 4.
Fig. 12 is a circuit diagram illustrating a basic configuration of a switching power supply circuit according to Example 5.
Fig. 13 is a circuit diagram illustrating a specific example of the switching power supply circuit according to Example 5.
Fig. 14 is a circuit diagram illustrating an example of a power conversion device according to Example 6.

### MODE FOR CARRYING OUT THE INVENTION

Hereinafter, examples of the present invention will be described in detail with reference to the drawings.

### Example 1

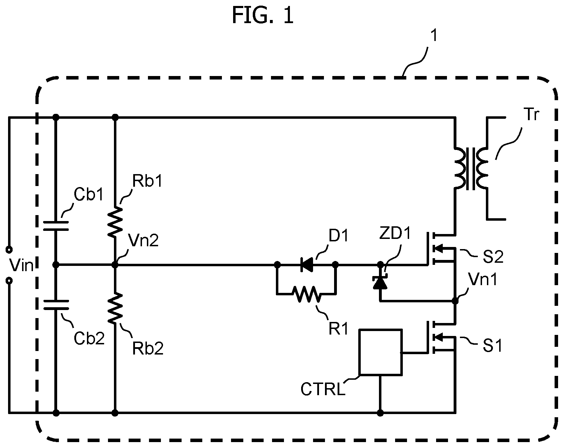

Fig. 1 is a circuit diagram of a switching power supply circuit 1 illustrated in Fig. 1 of Patent Document 1. The switching power supply circuit 1 includes a DC voltage source Vin, a member which is connected between terminals of the DC voltage source Vin and in which two capacitors Cb1 and Cb2 are connected in series, a transformer Tr in which one side of the primary winding is connected to a high-voltage side of the DC voltage source Vin, a switching element S1 in which a gate terminal is connected to a controller CTRL, a source terminal is connected to a low-voltage side of the DC voltage source Vin, and a drain terminal is connected to a node Vn1, a switching element S2 in which a source terminal is connected to the node Vn1 and a drain terminal is connected to another side of the primary winding in the transformer Tr, and a Zener diode ZD1 between the gate terminal and the source terminal of the switching element S2. A member in which a diode D1 and a resistor R1 are connected in parallel is provided between a connection point node Vn2 of the member in which the two capacitors Cb1 and Cb2 are connected in series, and the gate terminal of the switching element S2.

The switching element S1 receives a signal from the controller CTRL to perform switching. The controller CTRL operates, for example, such that the voltage of a secondary winding in the transformer Tr is set to a desired voltage.

The switching element S2 has a circuit configured to synchronize with switching of the switching element S1. When the switching element S1 turns on from an OFF state, a drain-source voltage of the switching element S1 decreases and then becomes about zero. As a result, the voltage at the node Vn1 is substantially equal to the voltage on the low-voltage side of the DC voltage source Vin. A potential difference between the node Vn2 and the node Vn1 is applied to the resistor R1 and the Zener diode ZD1. Thus, a current I1 flows on a path of Vn2→R1→ZD1→Vn1, and the switching element S2 turns on.

On the other hand, when the switching element S1 turns off from an ON state, the drain-source voltage of the switching element S1 rises, and thus exceeds the voltage at the node Vn2. As a result, the voltage at the node Vn1 is higher than the voltage at the node Vn2. A current I2 flows on a path of Vn1→ZD1→D1→Vn2, and the switching element S2 turns off.

Thus, the voltage of Vin is applied to the primary side of the transformer Tr during a period when all the switching elements S1 and S2 are in the ON state. Energy stored in the transformer Tr is transferred to the secondary side of the transformer during a period when all the switching elements S1 and S2 are in the OFF state.

In the circuit in the related art illustrated in Fig. 1, the current I1 flowing in the gate of S2 when the switching element S2 turns on causes the capacitor Cb1 to be charged, and the capacitor Cb2 to be discharged. However, the current I2 flowing in the gate of S2 when the switching element S2 turns off causes the capacitor Cb1 to be charged, and the capacitor Cb2 to be discharged. Thus, when the current flowing in the gate when the switching element S2 turns on is not equal to the current flowing in the gate when the switching element S2 turns off, the voltages of the capacitors Cb1 and Cb2 are not equal to each other in the circuit disclosed in Patent Document 1.

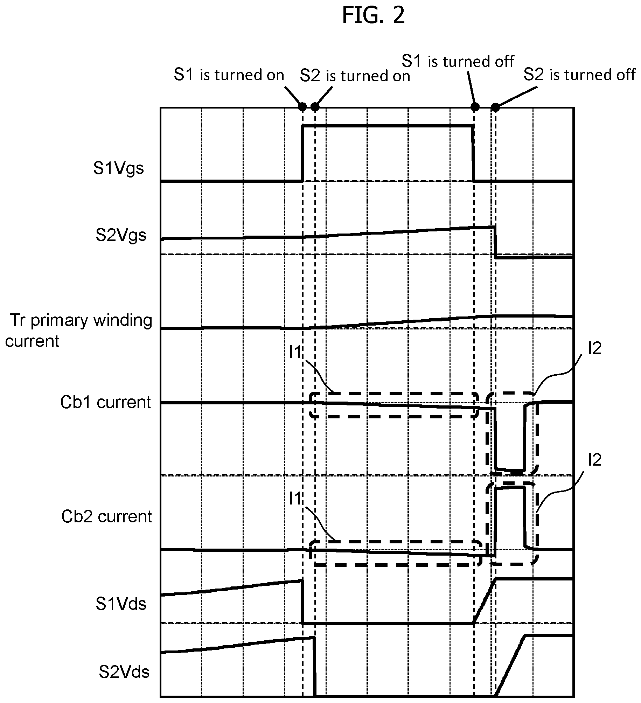

Fig. 2 illustrates an operation waveform of the circuit in the related art illustrated in Fig. 1. In Fig. 2, S1Vgs and S2Vgs indicate gate-source voltages of the switching elements S1 and S2, and S1Vds and S2Vds indicate drain-source voltages of the switching elements S1 and S2, respectively. If S1Vgs exceeds a threshold voltage of the element, the switching element S1 turns on, and S1Vds becomes about 0 V. When both S1Vds and S2Vds are about 0 V, the capacitors Cb1 and Cb2 are discharged, and thus the current increases in a negative direction. The current flows in the primary winding of Tr, and thus the current in the primary winding of Tr increases in a positive direction.

As illustrated in Fig. 2, it is understood that the current I2 causing the capacitor Cb1 to be discharged and the capacitor Cb2 to be charged after the switching element S1 is turned off is more predominant than the current I1 causing the capacitor Cb1 to be charged and the capacitor Cb2 to be discharged after the switching element S1 is turned on. Thus, it is understood that, in Patent Document 1, when values of the resistors Rb1 and Rb2 are substantially equal to each other, the voltage of the capacitor Cb2 is higher than the voltage of the capacitor Cb1. Therefore, a concern that a potential difference between the voltage on the low-voltage side of the DC voltage source and the voltage at the connection point between the two capacitors exceeds the breakdown voltage of the first switching element has been a problem.

Therefore, the present example for solving the problem will be described below.

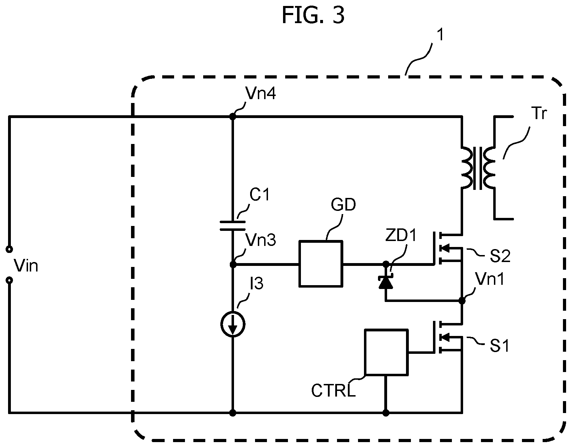

Fig. 3 illustrates a basic configuration of a switching power supply circuit 1 according to the present example. As illustrated in Fig. 3, in the present example, a DC voltage source Vin, a transformer Tr in which one side of a primary winding is connected to a high-voltage side of the DC voltage source Vin, a switching element S1 in which a gate terminal is connected to a controller CTRL and a source terminal is connected to a low-voltage side of the DC voltage source Vin, a switching element S2 in which a drain terminal is connected to another side of the primary winding in the transformer Tr, and a source terminal is connected to a drain terminal of the switching element S1, a Zener diode ZD1 connected between a gate and the source of the switching element S2, a gate drive circuit GD having one side which is connected to the gate terminal of the switching element S2, and a capacitor C1 connected between another terminal of the gate drive circuit GD and a high-voltage side terminal of the DC voltage source Vin. A current path I3 for a current flowing from a connection point between the capacitor C1 and the gate drive circuit GD to the low-voltage side of the DC voltage source is provided.

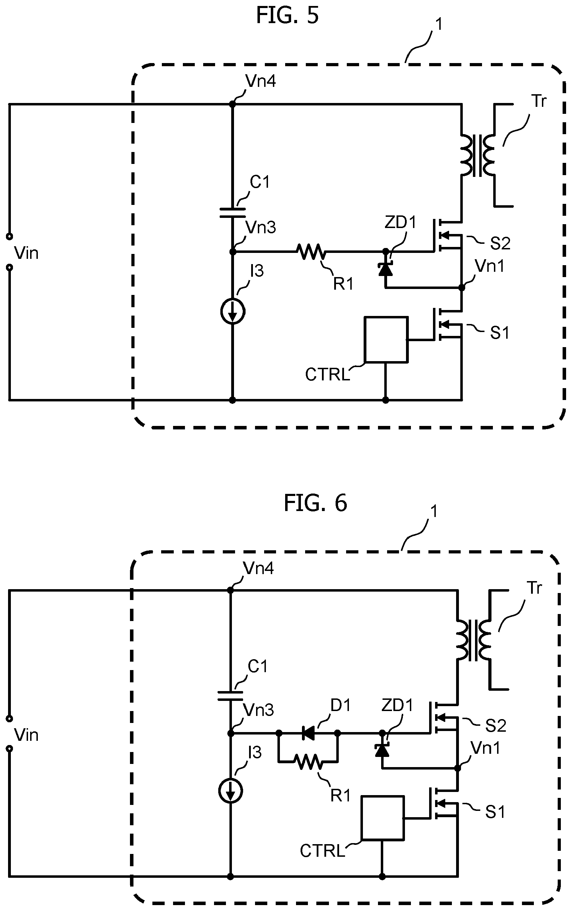

A circuit operation in the present example will be briefly described below. In the circuit illustrated in Fig. 3, the switching element S2 has a circuit configured to synchronize with switching of the switching element S1, similar to the circuit disclosed in Patent Document 1 illustrated in Fig. 1. Note that the description of the operation in the present example will be made on the assumption that the gate drive circuit GD is configured by a member in which a resistor R1 and a diode D1 are connected in parallel as illustrated in Fig. 6.

When the switching element S1 turns on from the OFF state, the drain-source voltage of the switching element S1 decreases, and then becomes about zero. As a result, the voltage at the node Vn1 is substantially equal to the voltage on the low-voltage side of the DC voltage source Vin. A potential difference between a node Vn4 and the node Vn1 is applied to the capacitor C1, the resistor R1, and the Zener diode ZD1. Thus, a current I1' flows on a path of Vn4→C1→Vn3→R1→ZD1→Vn1, and the switching element S2 turns on.

On the other hand, when the switching element S1 turns off from an ON state, the drain-source voltage of the switching element S1 rises, and thus exceeds the voltage at the node Vn3. As a result, the voltage at the node Vn1 is higher than the voltage at the node Vn3. A current 12' flows on a path of Vn1→ZD1→D1→Vn3→C1→Vn4, and the switching element S2 turns off.

Here, when only the capacitor C1 is connected, the capacitor C1 is charged in a direction in which a current flows from the node Vn3 to the node Vn4, by imbalance between the currents I1' and I2'. Thus, the voltage at the node Vn3 gradually decreases. Thus, the current path I3 is provided in a direction from the node Vn3 to the low-voltage side of the DC voltage source Vin. Because the current path I3 is provided, the voltage of the capacitor C1 has a voltage value determined by the currents I1', 12', and I3 flowing in the capacitor C1. Thus, it is possible to adjust the voltage of the capacitor C1 by adjusting the value of 13, such that the voltage at the node Vn3 is set to a desired value.

As described above, in the present example, the capacitor C1 is added between the high-voltage side of the DC voltage source Vin and the node Vn3, and the current path I3 is provided between the node Vn3 and the low-voltage side of the DC voltage source Vin. Thus, it is possible to set a current flowing in or a voltage applied to the switching elements S1 and S2 and the transformer Tr in the circuit configuration in which only one capacitor is provided, to be similar to the current or the voltage in the circuit in the related art. Accordingly, the circuit configuration in which voltage imbalance between a plurality of capacitors, which occurs in the related art, does not occur in principle is obtained.

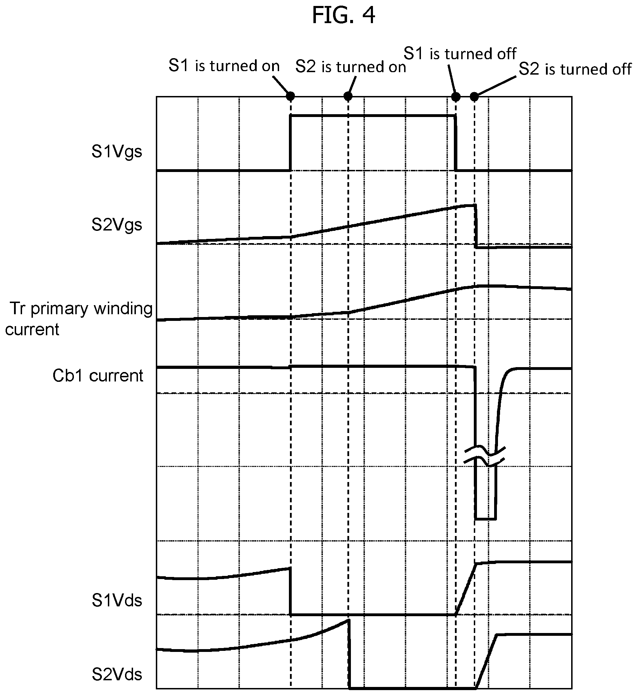

Note that examples of a difference between Patent Document 1 and the present example include a direction of the current of Cb1 during a period when all the switching elements S1 and S2 turn on. As illustrated in Fig. 2, in Patent Document 1 illustrated in Fig. 1, in a state where all the switching elements S1 and S2 turn on, the capacitors Cb1 and Cb2 perform a discharging operation together, the current increases in the negative direction (I1 in Fig. 2), and power is supplied to the transformer. Thus, when a current path includes Cb2, the current path is configured such that the current flows on a path of (the low-voltage side of the DC voltage source) →Cb2→Cb1→ (the high-voltage side of the DC voltage source). On the contrary, in the present example illustrated in Fig. 3, as illustrated by the operation waveform in Fig. 4, when both the switching elements S1 and S2 turn on, the capacitor Cb1 causes a charging operation to be performed in accordance with the current on the current path. Thus, the current flows on a path of (the high-voltage side of the DC voltage source) →Cb1→Cb2→ (the low-voltage side of the DC voltage source).

### Example 2

Next, a switching power supply circuit 1 according to Example 2 will be described with reference to Figs. 5 to 8. Note that description of common points with those in Example 1 will not be repeated.

Fig. 5 illustrates a case where the resistor R1 is connected to the gate terminal of the switching element S2 in comparison to the circuit illustrated in Fig. 3, as an example of the gate drive circuit GD. Here, if the value of the resistor R1 is increased, a rising time and a falling time of the gate voltage when the switching element S2 turns on or turns off are extended. Thus, it is possible to reduce switching noise occurring from the switching element S2. On the other hand, if the value of the resistor R1 is reduced, the rising time and the falling time of the gate voltage when the switching element S2 turns on or turns off are reduced. Thus, a loss in the switching element S2 is reduced.

In Fig. 6, the diode D1 is connected in parallel with the resistor R1 in comparison to the circuit illustrated in Fig. 5, as an example of the gate drive circuit GD. As illustrated in Fig. 6, if the diode D1 is connected, the rising time of the gate voltage when the switching element S2 turns off becomes shorter than the rising time in the circuit illustrated in Fig. 5, and the loss in turn-off of the switching element S2 is reduced. Therefore, the efficiency is improved in comparison to the circuit illustrated in Fig. 5. As described above, it is possible to adjust the conversion efficiency or the switching noise level of the switching power supply circuit 1 by connecting the resistor R1 and the diode D1 to the gate drive circuit GD.

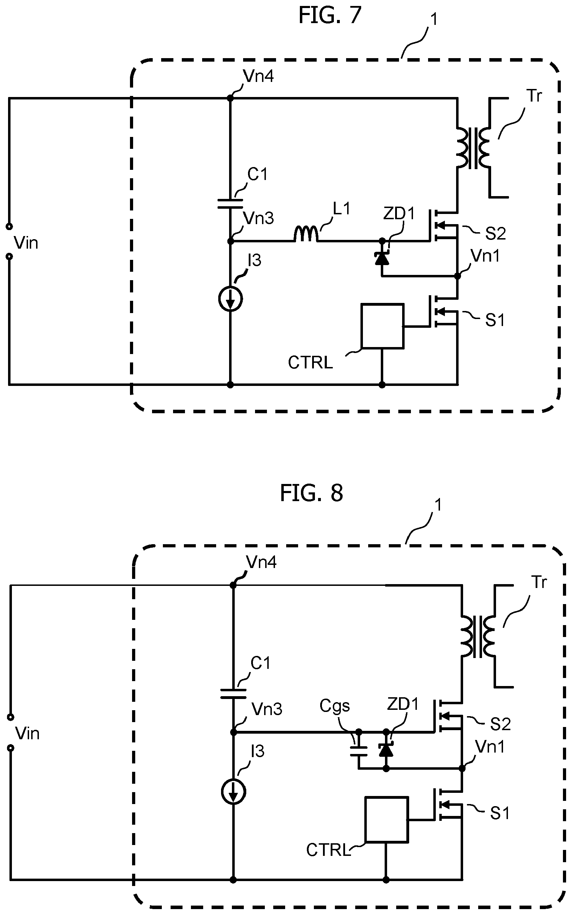

Fig. 7 illustrates a case where an inductor L1 is connected to the gate terminal of the switching element S2, as an example of the gate drive circuit GD. As illustrated in Fig. 7, the impedance between the gate terminal of the switching element S2 and the node Vn3, and the impedance between the Zener diode ZD1 and the node Vn3 increases by adding the inductor L1. Thus, it is possible to reduce a current which is generated by parasitic inductance and parasitic capacitance of the switching element and flows in the gate terminal or the Zener diode ZD1 of the switching element S2, and to suppress erroneous ignition of the switching element S2.

Fig. 8 illustrates a case where a capacitor Cgs is connected between the gate and the source of the switching element S2, as an example of the gate drive circuit GD. As illustrated in Fig. 8, if the capacitor Cgs is connected, when the current generated by the parasitic inductance and parasitic capacitance of the switching element flows in the gate terminal of the switching element S2 or the Zener diode ZD1, it is possible to cause a rate of raising the gate voltage of the switching element S2 to become longer than the rate in the circuit illustrated in Figs. 5 to 7, and to suppress erroneous ignition of the switching element S2.

According to the present example as described above, since passive components such as a resistor, a diode, an inductor, and a capacitor is connected to the gate drive circuit GD connected to the gate terminal of the switching element S2, it is possible to adjust operation characteristics of the switching power supply circuit 1 for various design elements such as efficiency, noise, and an erroneous operation, to obtain desired values.

### Example 3

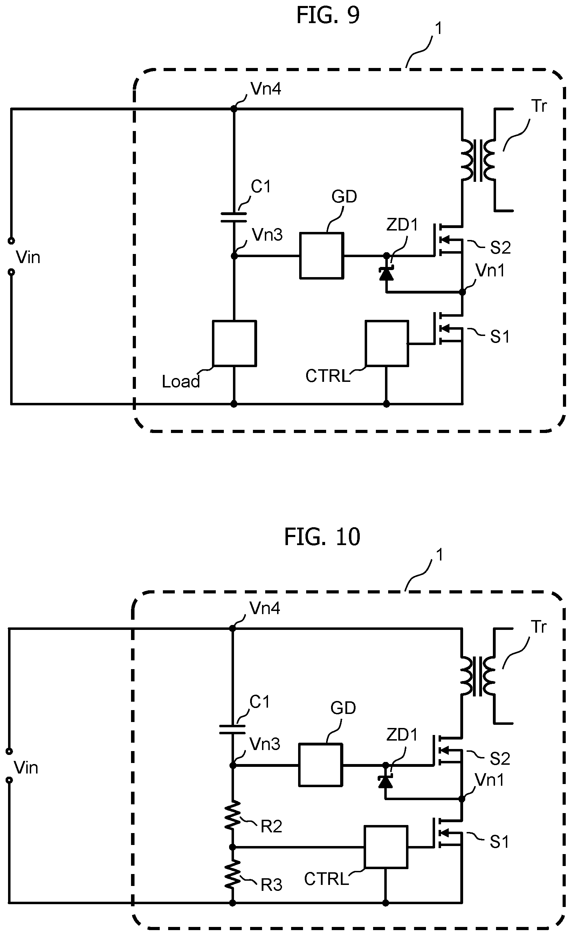

Next, a switching power supply 1 according to Example 3 will be described with reference to Figs. 9 and 10. Note that description of common points with those in Examples 1 and 2 will not be repeated. In the present example, the current path I3 described in Example 1 is replaced with a load Load.

In the circuit described in Example 1, the voltage of the capacitor C1 is adjusted by the current path 13. However, in the present example, as illustrated in Fig. 9, a control power supply used in the switching power supply circuit or a load such as an LED is connected to a portion at which the current path I3 has been connected in the related art. Thus, it is possible to efficiently utilize the energy which has been consumed in the current path I3 in the related art, and thus the efficiency in the entirety of the switching power supply circuit is improved.

Fig. 10 is a circuit diagram of a case where a control power supply of the controller CTRL is applied to the load Load, as an example of the present example. As illustrated in Fig. 10, resistors R2 and R3 are added between the node Vn3 and the low-voltage side of the DC voltage source Vin, and values of the resistors R2 and R3 are set to obtain appropriate values as the power supply voltage of the controller CTRL, by dividing the potential difference between the voltage at the node Vn3 and the voltage on the low-voltage side of the DC voltage source Vin.

In the present example as described above, the load Load is provided in the current path I3 as the specific configuration of the circuit described in Example 1. Thus, it is possible to use the energy which has been consumed in the current path I3 in the related art, in the switching power supply circuit, and thus the efficiency of the switching power supply circuit is improved.

### Example 4

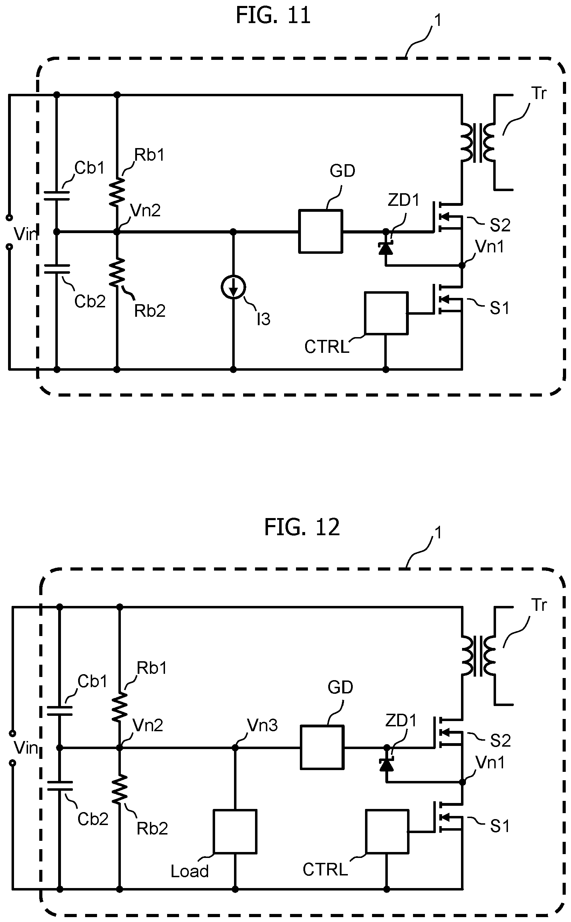

Fig. 11 illustrates the basic configuration of a switching power supply circuit 1 according to Example 4 of the present invention. Note that description of common points with those in Examples 1 to 3 will not be repeated.

In the present example as illustrated in Fig. 11, a current path I3 from the connection point between the capacitors Cb1 and Cb2 to the low-voltage side of the DC voltage source Vin is connected to the circuit illustrated in Fig. 1. Thus, regarding the problem that the voltage of the capacitor Cb2 becomes higher than the voltage of the capacitor Cb1 in the circuit in the related art, it is possible to cause a current which causes the voltage of the capacitor Cb2 to be discharged and the voltage of the capacitor Cb1 to be charged. Thus, it is possible to suppress the voltage imbalance between the capacitors Cb1 and Cb2. That is, the voltages of the capacitors Cb1 and Cb2 are determined by the sum of the current I1 flowing when S1 turns on, the current I2 flowing when S1 turns off, and the current I3 flowing from the node Vn2 to the low-voltage side of the DC voltage source Vin.

As described above, in the present example, the current path I3 is provided such that the current flows from the node Vn3 to the low-voltage side of the DC voltage source Vin in comparison to the circuit illustrated in Fig. 1. Thus, it is possible to suppress the influence of voltage imbalance which is the problem in the related art.

Note that the gate drive circuit GD illustrated in Fig. 11 is configured by passive components such as a resistor, a diode, an inductor, and a capacitor, so as to obtain desired characteristics for various design elements such as the conversion efficiency and the switching noise as described in Example 3.

### Example 5

Next, a switching power supply circuit 1 according to Example 5 will be described with reference to Figs. 12 to 13. Note that description of common points with those in Examples 1 to 4 will not be repeated. In the present example, the current path I3 described in Example 4 is replaced with a load Load.

In the circuit described in Example 4, the voltages of the capacitors Cb1 and Cb2 are adjusted by the current path 13. However, in the present example, a control power supply used in the switching power supply circuit or a load such as an LED is connected to a portion at which the current path I3 has been connected in the related art. Thus, it is possible to efficiently utilize the energy which has been consumed by the current path I3 in the related art, and thus the efficiency in the entirety of the system is improved.

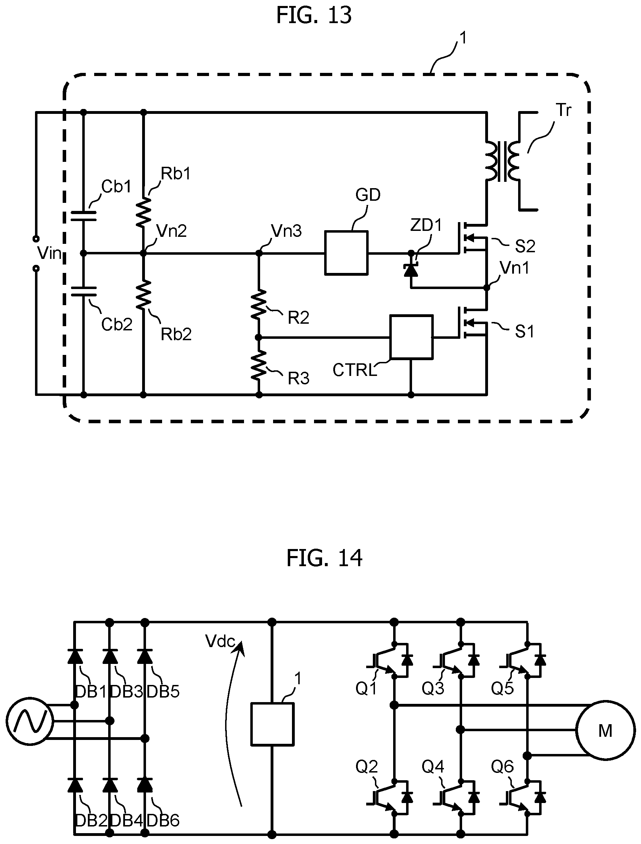

Fig. 13 is a circuit diagram of a case where a power supply of the controller CTRL is applied to the load Load, as an example of the present example. As illustrated in Fig. 13, resistors R2 and R3 are added between the node Vn3 and the low-voltage side of the DC voltage source Vin, and values of the resistors R2 and R3 are set to obtain appropriate values as the power supply voltage of the controller CTRL, by dividing the potential difference between the node Vn3 and the low-voltage side of the DC voltage source Vin.

In the present example as described above, the load Load is provided in the current path I3 as the specific configuration of the circuit described in Example 4. Thus, it is possible to use the energy which has been consumed in the current path I3 in the related art, in the switching power supply circuit, and thus the efficiency of the switching power supply circuit is improved.

### Example 6

Next, the present example will be described with reference to Fig. 14. Note that description of common points with those in Examples 1 to 5 will not be repeated.

In the present example as illustrated in Fig. 14, a circuit configuration in the case of being applied to an inverter circuit that receives an input of power from an AC power supply and outputs power to an AC load such as a motor, as an example of an application destination of the switching power supply circuit 1 described with reference to Figs. 11 to 13 will be described.

A switching power supply circuit 1 in the present example as illustrated in Fig. 14 is incorporated in a power conversion device including a rectifier circuit and an inverter circuit. The rectifier circuit receives an input of power from an AC power supply and is configured by diodes DB1 to DB6. The inverter circuit is configured by switching elements Q1 to Q6. The voltage at an output portion of the rectifier circuit serves as a DC voltage Vdc depending on the voltage in an AC system. The DC voltage Vdc is applied to the member in which the capacitor C1 and the current path I3 are connected in series in the circuit illustrated in Figs. 3 and 5 to 10, and to the member in which the capacitors Cb1 and Cb2 are connected in series in the switching power supply circuit 1 illustrated in Figs. 11 to 13. Thus, the switching power supply circuit 1 outputs the secondary voltage of the transformer Tr as illustrated in Figs. 3 and 5 to 13.

In the present example as described above, the circuit configuration in a case where the switching power supply circuit 1 is applied to the power conversion device that receives the input of the AC power from the AC power supply and is configured by the inverter circuit that outputs AC power has been described. In addition, the application destination of the switching power supply circuit 1 is not limited to the above example, and the switching power supply circuit may be similarly applied to the power conversion device that receives an input of DC power or outputs DC power.

Note that the present invention is not limited to the above examples, and various modification examples are included. For example, the above-described examples have been described in detail in order to explain the present invention in an easy-to-understand manner, and are not necessarily limited to those having all the described configurations. Further, it is possible to replace a portion of the configuration in one example with the configuration in another example, and it is also possible to add the configuration of one example to the configuration of another example. In addition, it is possible to add, delete, and replace a portion of the configuration in the examples with another configuration.

### REFERENCE SIGNS LIST

- 1: Switching power supply circuit
- Tr: Transformer
- S1, S2: Switching element
- ZD1: Zener diode
- D1: Diode
- R1, R2, R3, Rb1, Rb2: Resistor
- CTRL: Control circuit
- Cb1, Cb2, C1: Capacitor
- GD: Gate drive circuit

## Claims

1. A switching power supply circuit comprising:
a DC voltage source;
a transformer in which one terminal of a primary winding is connected to a high-voltage side of the DC voltage source;
a first switching element having a source terminal which is connected to a low-voltage side of the DC voltage source;
a controller that outputs a gate signal to a gate terminal of the first switching element;
a second switching element in which a source terminal is connected to a drain terminal of the first switching element and a drain terminal is connected to another terminal of the primary winding in the transformer;
a Zener diode in which a cathode terminal is connected to a gate terminal of the second switching element and an anode terminal is connected to the source terminal of the second switching element;
a gate drive circuit which is connected to the gate terminal of the second switching element; and
a first capacitor having one terminal which is connected to the high-voltage side of the DC voltage source,
wherein another terminal of the first capacitor is connected with the gate drive circuit, and
a current path for a current flowing is provided between the other terminal of the first capacitor and the low-voltage side of the DC voltage source.

2. The switching power supply circuit according to claim 1, wherein
the path for a current flowing allows the current to pass through the first capacitor from the high-voltage side of the DC voltage source and flow to the low-voltage side of the DC voltage source, during a period when all the first switching element and the second switching element turn on.

3. The switching power supply circuit according to claim 1, wherein
a current path connected between the other terminal of the first capacitor and the low-voltage side of the DC voltage source corresponds to a load consumed in the switching power supply circuit.

4. The switching power supply circuit according to claim 1, wherein
a current path connected between the other terminal of the first capacitor and the low-voltage side of the DC voltage source corresponds to a power supply of the controller that transmits a signal to the gate terminal of a first switching element.

5. The switching power supply circuit according to any one of claims 1 to 4, wherein
the gate drive circuit includes at least one of a resistor, a diode, an inductor, and a capacitor.

6. The switching power supply circuit according to claim 1, wherein
a second capacitor is connected between the other terminal of the first capacitor and the low-voltage side of the DC voltage source.

7. The switching power supply circuit according to claim 6, wherein
a resistor is connected in parallel with each of the first capacitor and the second capacitor.

8. The switching power supply circuit according to claim 6 or 7, wherein
a current path connected between the other terminal of the first capacitor and the low-voltage side of the DC voltage source corresponds to a load consumed in the switching power supply circuit.

9. The switching power supply circuit according to claim 6 or 7, wherein
a current path connected between the other terminal of the first capacitor and the low-voltage side of the DC voltage source corresponds to a power supply of the controller that transmits a signal to the gate terminal of a first switching element.

10. The switching power supply circuit according to any one of claims 6 to 9, wherein
the gate drive circuit includes at least one of a resistor, a diode, an inductor, and a capacitor.

11. A power conversion device comprising:
an AC voltage source;
a rectifier circuit that rectifies an AC voltage from the AC voltage source; and
an inverter circuit that converts a DC voltage obtained by rectification in the rectifier circuit into an AC voltage,
wherein the switching power supply circuit according to any one of claims 1 to 10 is connected between a high-voltage side and a low-voltage side of the DC voltage.
